Europäisches Patentamt

European Patent Office

Office européen des brevets

(19)

(11)  EP 1 032 540 B1

(12)  **FASCICULE DE BREVET EUROPEEN**

(45) Date de publication et mention
de la délivrance du brevet:
**29.08.2001   Bulletin 2001/35**

(21) Numéro de dépôt: **98955669.1**

(22) Date de dépôt: **16.11.1998**

(51) Int Cl.⁷: **C01F 7/14**

(86) Numéro de dépôt international:
**PCT/FR98/02443**

(87) Numéro de publication internationale:
**WO 99/25653 (27.05.1999 Gazette 1999/21)**

(54) **PRODUCTION DE TRIHYDRATE D'ALUMINE AVEC CONTROLE SEPARE DE LA TENEUR EN SODIUM ET DE LA GRANULOMETRIE**

HERSTELLUNG VON ALUMINIUMHYDROXID MIT GETRENNTER KONTROLLE DES NATRIUMGEHALTS UND DER KORNGRÖSSE

PRODUCTION OF ALUMINA TRIHYDRATE WITH SEPARATE CONTROL OF SODIUM CONTENT AND SIZE DISTRIBUTION

(84) Etats contractants désignés:
**DE ES FR GB GR IT**

(30) Priorité: **17.11.1997  FR 9714590**

(43) Date de publication de la demande:
**06.09.2000   Bulletin 2000/36**

(73) Titulaire: **ALUMINIUM PECHINEY
75218 Paris Cedex 16 (FR)**

(72) Inventeurs:
• **EL KADI, Bassam
F-13090 Aix en Provence (FR)**
• **CLERIN, Philippe
F-13119 Saint Savournin (FR)**

(74) Mandataire: **Pigasse, Daniel
Pechiney,
Immeuble "SIS"
217, cours Lafayette
69451 Lyon Cedex 06 (FR)**

(56) Documents cités:
DE-A- 2 616 182          US-A- 2 380 804
US-A- 3 649 184          US-A- 4 238 159

• **CHEMICAL ABSTRACTS, vol. 107, no. 26, 28
décembre 1987 Columbus, Ohio, US; abstract
no. 240235, KALISTRATOV, A. A.: "Effect of
turbulent agitation on the rate of aluminum
hydroxide precipitation" XP002068906 &
KOMPLEKSN. ISPOL'Z. MINER. SYR'YA (1987),
(8), 44-8 CODEN: KIMSDD,**

**Description**

## DOMAINE TECHNIQUE

L'invention concerne un procédé de fabrication du trihydrate d'alumine par décomposition en présence d'amorce d'une liqueur sursaturée d'aluminate de sodium issue du procédé BAYER, permettant de maîtriser séparément la teneur en sodium et la granulométrie du trihydrate d'alumine précipité, tout en conservant une productivité élevée.

Les caractéristiques physico-chimiques du trihydrate d'alumine, en particulier la pureté, la granulométrie, la taille des cristallites élémentaires et leur degré d'agglomération en grains plus ou moins friables, sont des paramètres qui conditionnent les propriétés de l'hydrate d'alumine et celles de l'alumine qui en est issue. Ces caractéristiques doivent être adaptées en fonction des applications du produit: alumine métallurgique pour la production d'aluminium par électrolyse ignée ou alumines techniques destinées à des domaines aussi variés que les charges ignifugeantes de matières plastiques, les réfractaires, les abrasifs, les céramiques et les catalyseurs.

Avec un procédé BAYER classique, qu'il soit de type américain ou de type européen, ces caractéristiques sont interdépendantes, ce qui rend l'adaptation parfaite de l'alumine à son application finale difficile à réaliser. Ainsi le producteur d'alumine qui disposera d'un procédé Bayer lui donnant la possibilité de fabriquer un trihydrate d'alumine en réglant la granulométrie indépendamment de la teneur en sodium résiduel verra dans ce procédé de fabrication un avantage considérable en terme de souplesse d'exploitation. Cet avantage sera d'autant plus appréciable si les performances du procédé en terme de productivité et de fiabilité sont conservées, voire même améliorées par rapport à celles obtenues avec les procédés connus.

## ETAT DE LA TECHNIQUE

Le procédé Bayer largement décrit dans la littérature spécialisée constitue la technique essentielle de production d'alumine destinée à être transformée en aluminium par électrolyse ignée ou à être utilisée à l'état d'hydrate, d'alumine de transition, d'alumine calcinée, d'alumine frittée ou fondue, dans les nombreuses applications relevant du domaine des alumines techniques.

Selon ce procédé, le minerai de bauxite est attaqué à chaud au moyen d'une solution aqueuse d'hydroxyde de sodium à concentration appropriée, provoquant ainsi la solubilisation de l'alumine et l'obtention d'une suspension constituée de particules de résidu inattaqué dans une solution d'aluminate de sodium, appelée "liqueur d'aluminate".

En général, cette suspension est ensuite diluée de façon à séparer par décantation les résidus inattaqués de la liqueur d'aluminate. Celle-ci, une fois "nettoyée", est refroidie jusqu'à une température où elle se trouve dans un état en fort déséquilibre de sursaturation. On la nomme à ce stade "liqueur sursaturée". On caractérise l'état de saturation ou de stabilité des liqueurs par le rapport pondéral:

$$R_p = \frac{concentration\ en\ Al_2O_3\ dissoute\ (en\ g/l)}{concentration\ en\ Na_2O\ caustique\ (en\ g/l)}$$

Ce fort déséquilibre aboutit à la précipitation du trihydrate d'alumine, phénomène que l'on appelle "décomposition", instable mais à cinétique lente et qu'il est impératif de parfaitement contrôler. Après la décomposition la liqueur d'aluminate de sodium, appauvrie en alumine du fait de la précipitation, appelée "liqueur décomposée", est recyclée après concentration vers l'attaque du minerai.

La décomposition est un phénomène complexe de précipitation, de nourrissement et d'agglomération de cristallites aboutissant à la production de particules de trihydrate d'alumine. Ce phénomène se produit lentement, ce qui nécessite de faire circuler la liqueur sursaturée dans une succession de bacs, avec recyclage partiel du trihydrate produit, ce recyclage étant destiné à faciliter la précipitation des cristallites par l'apport de germes ou "nuclei". La "suspension d'aluminate" est le milieu circulant dans la chaîne de décomposition; c'est un mélange de liqueur d'aluminate et de particules solides de trihydrate d'alumine, qui viennent de précipiter ou qui sont issues de l'agglomération ou du nourrissement des particules de trihydrate prélevées en aval de la décomposition et recyclées en amont. Les particules recyclées en raison de leur petite taille sont appelées "fines". Dans la pratique, la décomposition est menée de façon différente dans les chaînes BAYER européennes et les chaînes BAYER américaines.

Les chaînes BAYER américaines utilisent une liqueur d'aluminate moins concentrée en soude: si cette dernière est moins productive (on obtient moins de trihydrate d'alumine pour un même volume de liqueur d'aluminate), elle est par contre riche en germes. L'apport en trihydrate recyclé est un ensemencement et un appoint régulateur effectué au début de la décomposition, autant au cours de la première étape, appelée "agglomération", qu'aux étapes de "nourrissement" ou "croissance" qui suivent.

Les chaînes BAYER européennes utilisent une liqueur d'aluminate beaucoup plus concentrée en soude. Ceci permet d'obtenir plus de trihydrate pour un volume donné (voir plus loin la définition de la productivité) mais rend la précipitation plus délicate car les germes de cristallisation sont beaucoup plus rares. En général, on mélange dans un premier bac, appelé bac d'amorce, la liqueur sursaturée avec des amorces ou germes pour former une "suspension sursaturée". La précipitation se poursuit dans les bacs suivants, appelés "décomposeurs", soit par nourrissement des grains ou cristallites existants, soit par apparition de nouveaux germes, soit par formation de particules par agglomération des cristallites.

Que le procédé soit américain ou européen, le recyclage direct d'une partie du trihydrate d'alumine produit s'avère insuffisant si l'on veut fabriquer un produit avec des caractéristiques précises. Les brevets US 3 486 850 et US 4 311 486 préconisent d'effectuer un classement du trihydrate produit avant de recycler les fines à plusieurs étapes de la décomposition. En ce qui concerne les procédés européens, le seul recyclage du trihydrate d'alumine ne permet pas une bonne maîtrise de la taille et de la structure des précipités. On constate en effet l'apparition brutale de "crises granulométriques", où le trihydrate produit est soit trop fin, soit trop gros et où le remède, appliqué avec beaucoup de précaution - il ne faut pas perturber les autres caractéristiques du trihydrate produit ni diminuer la productivité à la décomposition de la liqueur d'aluminate sursaturée - n'a pas d'effet immédiat.

Il est connu qu'un apport de germes fabriqués en dehors de la chaîne BAYER donne plus de souplesse dans la conduite du procédé. Ainsi, FR-A-2 709 302 propose de récupérer les fines classées provenant d'une autre chaîne de décomposition, FR-A-1 525 302 propose l'ensemencement en début de décomposition d'une amorce auxiliaire précalibrée sous forme de gel d'ultrafines et EP-A-0 344 469 propose du trihydrate broyé comme amorce auxiliaire précalibrée.

Mais ces solutions ne sont pas économiquement avantageuses. La solution de FR-A-1 525 302 est coûteuse, celle que préconise FR-A-2 709 302 n'est intéressante que s'il existe une deuxième chaîne de décomposition sur le même site industriel. Enfin la solution apportée par EP-A-0 344 469 est très coûteuse car il est nécessaire d'obtenir une répartition granulométrique des germes broyés très resserrée pour obtenir un trihydrate d'alumine de qualité satisfaisante.

## PROBLEME POSE

Ainsi, en dépit d'un art antérieur fourni, l'homme du métier ne dispose pas d'un procédé industriel fiable et peu coûteux permettant de fabriquer un trihydrate en contrôlant séparément les paramètres de conduite de la chaîne BAYER, influant notamment sur la granulométrie et sur la teneur en sodium résiduel, tout en conservant une bonne productivité.

Par fiabilité il faut comprendre reproduction précise et stable dans le temps des caractéristiques visées à partir des consignes de réglage, ce qui sous-entend donc une faible dispersion des caractéristiques obtenues par rapport aux caractéristiques visées.

Par productivité, il faut comprendre productivité de la liqueur d'aluminate de sodium sursaturée issue de l'attaque alcaline de la bauxite selon le procédé Bayer qui précipite lors de la décomposition en présence d'amorce. Le rapport pondéral Rp, caractéristique de l'état de saturation en alumine dissoute dans la liqueur du cycle Bayer, permet de déterminer la productivité de la liqueur lors de sa décomposition. Celle-ci est définie par la quantité d'alumine restituée, sous forme de trihydrate d'alumine, après décomposition de la liqueur sursaturée, rapportée à un volume donné de liqueur sursaturée. La productivité, exprimée en kilogrammes d'alumine par mètre cube de liqueur (kg $Al_2O_3$/$m^3$), est obtenue en multipliant la variation du Rp avant et après décomposition par la concentration en soude caustique de la liqueur sursaturée.

En général, cette concentration est plus élevée dans les procédés Bayer de type européen (plus de ≈140 g Na2O/l) que dans les procédés de type américain (≈120 g Na2O/l) et ceci explique pourquoi une productivité à la décomposition de la liqueur sursaturée est considérée comme bonne lorsqu'elle dépasse 70 kg $Al_2O_3$/$m^3$ pour un procédé Bayer de type américain et lorsqu'elle dépasse 80 kg $Al_2O_3$/$m^3$ pour un procédé Bayer de type européen.

Les crises granulométriques observées sur les chaînes BAYER européennes sont liées à une plus faible sursaturation de la liqueur d'aluminate, qui empêche la présence d'une forte quantité de germes dans le bac d'amorce. Les chaînes américaines, pour l'instant moins sensibles aux crises granulométriques décrites plus haut, risquent de le devenir à terme dans la mesure où les normes internationales de qualité imposent une diminution de la teneur en soude dans l'alumine produite, ce qui implique de réduire la sursaturation de l'aluminate. Ainsi, l'introduction d'un moyen de génération des amorces permettant de contrôler séparément la granulométrie et la teneur en sodium résiduel du trihydrate intéresse toutes les chaînes BAYER, qu'elles soient de type américain ou de type européen et quelle que soit la taille de ces installations.

**OBJET DE L'INVENTION**

Le procédé selon l'invention repose sur le constat surprenant qu'en appliquant en début de décomposition une action mécanique intense sur une partie de la suspension, on observe, au bout de plusieurs dizaines d'heures, la formation de germes ou nucleï de trihydrate faisant office d'amorces. Plusieurs types d'action mécanique intense ont été effectués: par broyage avec un broyeur vibrant, par cavitation sous haute fréquence avec un dispositif de sonochimie ou encore par cisaillement intense de la suspension à l'aide d'une turbine ou d'une pompe centrifuge.

Par "début de décomposition", on entend une étape où la liqueur d'aluminate se trouve en amont de la chaîne de décomposition, par exemple au niveau du bac d'amorce ou du premier bac décomposeur de la chaîne BAYER de type européen, ou bien au niveau du bac d'agglomération ou encore, de préférence, au niveau du premier bac nourisseur dans une chaîne BAYER de type américain.

Les différents types d'action mécanique envisagés dans cette invention sont réalisés sur une aliquote de la suspension prélevée en début de décomposition et réintroduite après application de l'action mécanique dans le circuit Bayer au niveau du prélèvement, de préférence dans le même bac ou en aval du point de prélèvement. Suivant l'action mécanique envisagée, l'aliquote correspond à une fraction plus ou moins grande de la suspension en circulation dans le circuit Bayer: elle représente typiquement 5 à 40 %, de préférence entre 10 et 30 %, de la suspension pour les actions entraînant un cisaillement intense et elle représente des proportions beaucoup plus faibles (moins de 1%) pour le broyage et l'application d'ultra-sons.

L'action mécanique peut être un broyage, de préférence réalisé par un broyeur vibrant, d'une partie de la suspension prélevée et réintroduite après broyage en début de décomposition.

L'action mécanique peut également se traduire par une cavitation sous haute fréquence, obtenue à l'aide d'un générateur d'ultra-sons appliqué sur une partie de la suspension en recirculation sur un point du début de la décomposition.

L'action mécanique peut également provenir d'un dispositif générant dans la suspension un écoulement laminaire ou turbulent, au sein duquel règnent de forts gradients de vitesse qui ne pourraient être obtenus par une simple implantation de viroles ou de chicanes contrecarrant la circulation naturelle de la suspension.'

Les germes sont sans doute créés assez tôt mais leur taille est telle qu'ils restent indécelables avec les moyens de contrôle courants, en l'occurrence un compteur de particules, qui ne peut déceler des particules que si leur diamètre dépasse 0.5 à 1μ. C'est en persévérant dans cette action sans effet immédiat que la demanderesse a constaté qu'il devient plus facile, au bout de quelques semaines, de maîtriser la taille et la morphologie des particules de trihydrate d'alumine. Une telle action mécanique, continue ou répétée régulièrement, permet d'éviter les fâcheuses "crises granulométriques" rencontrées dans les procédés à haute productivité.

C'est un phénomène à cinétique très lente, qui ne produit ses premiers effets qu'après plusieurs dizaines d'heures. Lesdits effets sont particulièrement longs à observer du fait du recyclage d'une partie du trihydrate produit. Ils se traduisent:

- soit par une augmentation progressive de la taille des grains si le nombre d'amorces introduites est insuffisant, phénomène compensé jusqu'à la présente invention par une action sur la température de la suspension dans le bac d'amorce, ayant une influence directe sur la teneur résiduelle en sodium du trihydrate produit
- soit par une stabilisation de la taille des particules produites par la chaîne de décomposition, si l'apport d'amorces dépasse une valeur critique; plus le nombre d'amorces ainsi apportées est grand, plus la taille d'équilibre des particules produites au cours du cycle de décomposition est faible.

Pour y voir plus clair, la demanderesse a isolé une partie de la suspension d'aluminate sursaturé en tête de décomposition et a observé dans un bac auxiliaire les premiers effets et les effets à long terme de différentes actions mécaniques produites dans ladite suspension.

Ce phénomène a été mis en évidence en laboratoire grâce à un dispositif particulier: un circuit reliant au bac d'amorce un bac auxiliaire dans lequel on produit un cisaillement et qui, après arrêt simultané de l'alimentation en suspension sursaturée et de l'action mécanique, permet aux nucleï de grossir suffisamment pour que l'on puisse déceler leur présence. Ce dispositif, en accélérant l'observation des résultats, a permis de comparer différents moyens de génération de cisaillement et de définir les paramètres conduisant aux conditions d'obtention d'amorce optimale. Il a permis également de définir un dispositif préféré pour mettre en oeuvre l'invention dans des conditions industrielles.

On pense que le cisaillement introduit dans la suspension a pour effet en premier lieu de décoller un certain nombre de cristallites, voire de particules, des gros agglomérats déjà formés. Accessoirement ce cisaillement peut susciter des phénomènes de cristallisation secondaire. Les essais en laboratoires ont montré que la génération d'amorces est d'autant plus importante que la suspension est soumise pendant un certain temps à un cisaillement intense. L'effet de cette génération ne devient sensible - c'est-à-dire n'a d'influence sur la granulométrie du trihydrate d'alumine produit - qu'à partir d'un certain taux de cisaillement critique, maintenu au moins pendant un certain temps critique.

Ce taux de cisaillement critique et ce temps critique dépendent des moyens utilisés pour générer l'action mécanique introduite dans la suspension.

Parmi tous les moyens testés, deux moyens de génération mécanique des amorces se sont révélés avantageux:

- une turbine cisaillante fonctionnant à vitesse maxi mais pendant un temps variable, fonction de la quantité de nucleï à produire.
- une pompe centrifuge fonctionnant soit à la demande soit continuellement mais avec un débit variable, en fonction de la quantité de nucleï à produire. Il s'agit d'une pompe supplémentaire ajoutée à la (aux) pompe(s) existante(s) qui assure(nt) la circulation de la suspension dans la chaîne de décomposition. Une solution préférée consiste à réaliser un circuit en dérivation d'un bac en début de décomposition - bac d'amorce par exemple - grâce auquel on peut imposer une recirculation à fort débit de la suspension d'aluminate sursaturée.

En ce qui concerne la turbine cisaillante, les forces de turbulence et de cisaillement naissant au sein de l'entrefer entre le stator et rotor ont une influence déterminante sur la génération des amorces. La haute fréquence des chocs mécaniques sur le système stator-rotor à grandes vitesses périphériques entraîne une très forte dispersion des particules de la suspension. Un effet notable de génération de particules est observé lorsque la vitesse périphérique des ailettes du rotor dépasse 20 m/s. Dans le cas précis de la turbine cisaillante, on peut estimer à $10^3$ - $10^4$ s$^{-1}$ l'ordre de grandeur des vitesses de cisaillement imposées à la suspension lorsqu'elle passe dans l'entrefer stator - rotor.

La demanderesse a constaté qu'il pouvait être énergétiquement avantageux de pratiquer le cisaillement sur une aliquote de la suspension sursaturée, prélevée et réintroduite dans le bac d'amorce. L'aliquote prélevée correspond à une portion du flux de suspension d'aluminate telle que le nombre de germes créés et recyclés dans le bac d'amorce soit suffisant. Pour une énergie mécanique donnée, l'intensité du cisaillement produit dépend de la vitesse moyenne de circulation de la suspension: plus cette dernière est faible, plus il est facile d'atteindre ce cisaillement critique. D'autre part, l'usure due à l'abrasion par les particules de la suspension est d'autant plus faible que la vitesse moyenne de circulation de la suspension est faible.

Ainsi, une ou plusieurs turbine(s) cisaillante(s) sont soit plongée(s) directement dans le bac d'amorce, soit montée(s) sur un (ou plusieurs) circuit(s) de recirculation sur le bac d'amorce où elle(s) joue(nt) le rôle de pompe(s).

En ce qui concerne la pompe centrifuge, la demanderesse a constaté qu'il était avantageux de placer un circuit de recirculation sur le bac auxiliaire au bac d'amorce, ce qui permet d'avoir un débit de recirculation nettement supérieur au débit d'alimentation du bac auxiliaire. Le cisaillement critique est en effet plus facilement atteint dans ce bac auxiliaire, d'autant plus facilement que la recirculation à fort débit fait repasser plusieurs fois la suspension dans la zone à forts cisaillements. Avec un tel circuit en recirculation à fort débit sur le bac auxiliaire, lui-même alimenté par une aliquote de la suspension du bac d'amorce retournant vers le bac d'amorce avec un débit moindre, le flux horaire de particules générées est nettement supérieur à celui que l'on peut obtenir avec une turbine cisaillante de même puissance.

On trouve dans le commerce des pompes de dimensions suffisantes pour alimenter un seul circuit de recirculation et générer le nombre d'amorces voulu. C'est pourquoi, dans la modalité préférée de l'invention, il suffit d'introduire sur ce circuit de recirculation une pompe centrifuge de caractéristiques mécaniques et hydrauliques comparables à celles de la pompe centrifuge déjà existante, utilisée pour faire circuler la suspension dans la chaîne de décomposition. Une deuxième pompe supplémentaire, ayant des caractéristiques mécaniques et hydrauliques moins importantes, permet de réalimenter le bac d'amorce à partir du bac auxiliaire.

En ne prélevant qu'un dixième de la suspension du bac d'amorce pour alimenter le bac auxiliaire sur lequel on fait recirculer avec un débit au moins cinq fois supérieur, le nombre d'amorces générées, reconduites dans le bac d'amorce, est suffisant pour l'ensemble de la suspension passant dans le bac d'amorce.

En ce qui concerne le broyage, le mécanisme de création de germes est différent: les grains sont cassés et les surfaces de rupture, très actives, sont le siège de précipitations secondaires. Pour pouvoir contrôler le nombre de germes créés, il est préférable de n'agir que sur une fraction très faible (inférieure à 1%, typiquement de l'ordre de 1 pour mille) de la suspension totale circulant dans la chaîne de décomposition du circuit Bayer.

Le dispositif de broyage préféré de l'invention est un broyeur vibrant comportant deux tubes broyeurs auxquels les vibrations générées par des balourds transmettent un mouvement de rotation à peu près circulaire. Les deux tubes sont généralement remplis à 65% de corps broyants. Les impulsions communiquées aux corps broyants par les parois des tubes génèrent les impacts imposés à la suspension traversant le broyeur. Suivant la matière à traiter et la finesse requise, on utilise comme corps broyants des boulets, des barres, ou encore ce qu'on appelle des cylpeps (tronçons de barre) de différentes tailles et en différents matériaux. Dans le cadre de l'invention, l'emploi de cylpeps en acier s'est révélé avantageux.

La très faible proportion de suspension à traiter permet d'utiliser des dispositifs de puissance relativement faible - de l'ordre de 20 kW - puisqu'ils n'auront à traiter que des flux de suspension de l'ordre du m$^3$/h, alors que le débit de la suspension dans une chaîne Bayer industrielle est de l'ordre du millier de m$^3$/h.

L'emploi d'ultra-sons de grande puissance (typiquement 100 W/cm2 à 20-500 kHz) entraîne un phénomène de cavitation acoustique qui se traduit également par la cassure des grains avec création de surfaces de rupture très actives. Comme pour le broyage, il est préférable de n'agir que sur une faible proportion, typiquement moins de 5%, de la suspension en circulation dans la chaîne de décomposition du circuit Bayer. La suspension en recirculation passe par un bac auxiliaire dans lequel on génère les ultra-sons.

Quelle que soit l'action mécanique utilisée, il s'est avéré utile d'ajouter un bac auxiliaire dans le circuit par lequel passe l'aliquote de suspension à traiter. Dans tous ces cas, il s'est avéré utile d'ajouter à la suspension, au niveau du bac auxiliaire, une liqueur sursaturée en alumine, par exemple une aliquote de la liqueur d'aluminate sursaturé prélevée eu tout début de décomposition. Ceci permet d'une part de diluer les matières sèches, la moindre viscosité de la suspension qui en résulte facilitant les conditions d'exploitation, et d'autre part et surtout d'augmenter notablement le Rp de la suspension d'aluminate et d'améliorer ainsi le rendement de la génération de fines.

Le procédé selon l'invention sera mieux compris par la description détaillée de sa mise en oeuvre.

La figure 1 représente schématiquement les étapes de la décomposition d'une chaîne BAYER de type européen.

La figure 2 représente un circuit en dérivation sur le bac d'amorce, dans lequel circule une aliquote de la suspension d'aluminate sursaturée grâce à une turbine cisaillante qui joue le rôle de pompe à recirculation. Cette turbine génère selon l'invention un cisaillement important dans la suspension d'aluminate sursaturé.

La figure 3 représente un bac auxiliaire alimenté par un circuit en recirculation partant et aboutissant au bac d'amorce, une partie de l'aliquote passant par le bac d'auxiliaire étant elle-même extraite et recyclée avec un fort débit sur le bac auxiliaire à l'aide d'une pompe centrifuge.

La figure 4 représente schématiquement une chaîne BAYER de type européen avec un système de génération mécanique d'amorces selon l'invention, en dérivation sur le bac d'amorce.

La figure 5 représente schématiquement une chaîne BAYER de type américain avec un système de génération mécanique de fines selon l'invention, en dérivation sur le premier bac de grossissement.

La figure 6 représente un circuit en dérivation sur le bac d'amorce, dans lequel circule une aliquote de la suspension d'aluminate qui passe au travers d'un broyeur vibrant.

## MISE EN OEUVRE DE L'INVENTION

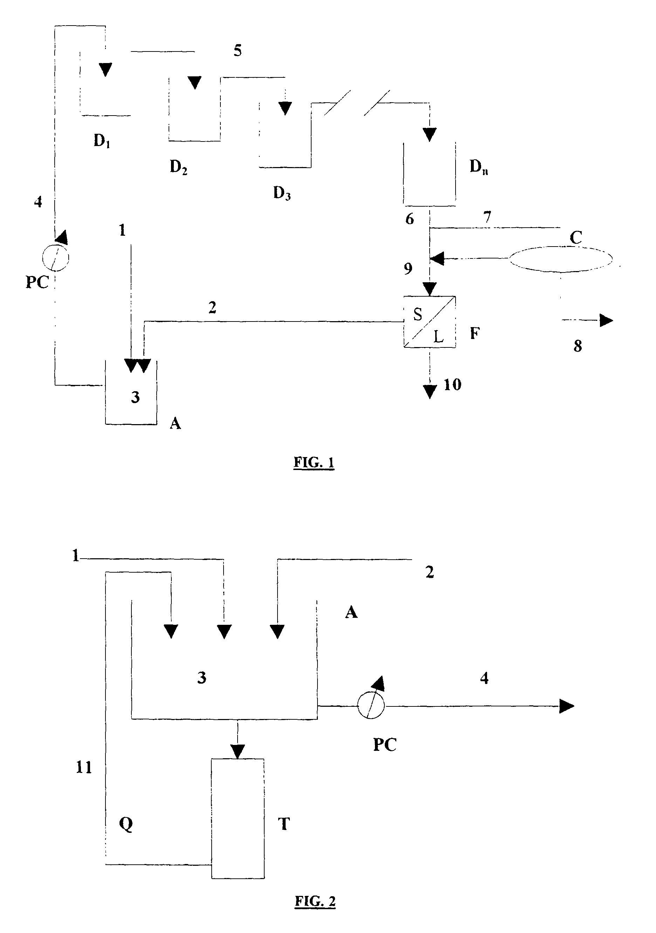

Les exemples qui suivent s'appuient sur une mise en oeuvre préférée de l'invention, appliquée aux chaînes BAYER de type européen à haute productivité à la décomposition, telles que celle figurant sur le schéma de la Figure 1. La liqueur d'aluminate sursaturé **1**, de Rp voisin de 1,2 et ayant une concentration en soude caustique comprise entre 140 et 180 g Na20/l, est mélangée au trihydrate d'alumine **2** recyclé en fin de décomposition et imprégné de liqueur décomposée. La suspension sursaturée **3** ainsi formée a un Rp voisin de 1,0. Après un séjour de 15 minutes dans le bac d'amorce **A,** la suspension **4** est entraînée sous l'effet de la pompe **PC** vers la série de décomposeurs **D1, D2, D3, .., Dn.** Une partie **7** de la suspension est séparée de la suspension décomposée **6** de façon à obtenir par classement **C** le trihydrate d'alumine classé **8** destiné au traitement final (lavage, calcination, ...). L'autre partie **9** est filtrée **F**, la liqueur décomposée filtrée **10** est à nouveau concentrée en vue d'être recyclée vers une nouvelle attaque de la bauxite, tandis que le filtrat est le trihydrate d'alumine **2** servant d'amorce et mélangé à la liqueur d'aluminate sursaturée **1.**

Pour mettre en évidence l'influence d'un fort cisaillement imposé au sein de la suspension, la demanderesse a réalisé un dispositif expérimental de dimension réduite reproduisant un bac d'amorce auxiliaire, alimenté en suspension d'aluminate sursaturée **3** provenant d'une chaîne BAYER européenne répondant à la présente description.

## MISE EN EVIDENCE EXPERIMENTALE

Le dispositif expérimental permet de comparer dans deux bacs - l'un d'essai, l'autre de référence - l'évolution de la décomposition de la liqueur d'aluminate sursaturée ayant subi (bac d'essai) ou non (bac de référence) l'action mécanique à étudier. Ces deux bacs de 1 m$^3$ sont alimentés en continu et en parallèle, avec le même débit, avec une suspension d'aluminate sursaturé **3** de Rp= 0,96 et contenant 155 g Na2O/l, provenant du bac d'amorce d'une chaîne BAYER. Dans les deux bacs, la suspension est continuellement agitée mécaniquement et maintenue à une température de 60 °C. Le temps d'alimentation est nettement supérieur au temps de séjour de la suspension dans les bacs pour s'assurer de l'homogénéité de ces derniers.

Dans le bac d'essai, la suspension d'aluminate sursaturée est soumise à un cisaillement d'intensité variable et pendant une durée variable, les deux bacs étant toujours alimentés. Les alimentations des deux bacs sont ensuite coupées simultanément à l'arrêt de l'action mécanique.

Les bacs sont ensuite isolés et maintenus sous agitation et en température afin que s'effectue la décomposition. Des prises d'échantillons sont effectuées à intervalles de temps réguliers pour suivre les évolutions granulométriques et la cinétique de décomposition. Compte tenu de la plage de mesure des appareils d'analyse - des compteurs de particules - les très fines particules, de taille inférieure à 1 μm, ne peuvent être détectées et ce n'est qu'après nourrissement que ces particules peuvent être détectées et quantifiées.

### Essais avec une furbine cisaillante

Nous avons utilisé une turbine cisaillante ULTRA TURRAX (marque déposée) fonctionnant à 2900 t/mn avec une puissance dissipée de 6,3 kW. Le cisaillement maximum généré par la turbine se situe au voisinage de la partie périphérique de la partie mobile, la vitesse y atteignant 23 m/s. La turbine plongeait directement dans le bac d'essai. Plusieurs durées de cisaillement ont été testées, variant de 0,075 à 3 fois le temps de séjour moyen de la suspension dans le bac d'essai.

Les résultats ont été exprimés en terme de rapport de fréquence de nucléation entre le bac d'essai et le bac de référence. A partir d'une durée de cisaillement égale à 0,375 fois le temps de séjour moyen de la suspension dans le bac d'essai, la turbine a provoqué une génération d'ultra fines grossissant au bout de 48 heures en fines ( de diamètre moyen compris entre 1 et 2 μ) décelables par le compteur de particules. Le nombre de ces ultra fines augmente avec la durée de cisaillement et est entre 10 et 80 fois supérieur au nombre d'ultra fines créées sans cisaillement préalable.

Quel que soif le temps de cisaillement testé, le flux horaire de fines générées par ce cisaillement reste à peu près constant. En l'occurrence, il a été mesuré ici compris entre $3,5 \pm 1$ et $4,5 \pm 1$ $10^{13}$ particules par heure.

### Essais avec une pompe centrifuge

Nous avons utilisé une pompe centrifuge M40 SCHABAVER fonctionnant en circuit fermé sur une dérivation du bac d'essai proprement dit. Cette pompe a fonctionné pendant un temps nettement supérieur au temps de séjour moyen de la suspension dans le bac d'essai. On a fait varier le rapport entre le débit de recirculation de la pompe et le débit d'alimentation du bac entre 1 et 15.

Avec un rapport entre le débit de recirculation de la pompe et le débit d'alimentation du bac voisin de 10, le flux horaire de particules générées a été mesuré à $3.5 \pm 0,5$ $10^{14}$ particules par heure.

Il est difficile de préciser le taux de cisaillement atteint au sein de la suspension quand il est généré par la pompe centrifuge. Mais il semble que c'est la vitesse linéaire de la suspension à l'entrée des aubes du disque qui détermine l'effet cisaillant; cette dernière dépend d'une part des caractéristiques mécaniques et hydrauliques de la pompe mais aussi du rapport entre le débit de recirculation de la pompe et le débit d'alimentation du bac. Les vitesses de cisaillement imposées par la pompe à la suspension sont probablement moins élevées que celles générées par la turbine cisaillante mais la recirculation à fort débit permet à la suspension de passer plusieurs fois dans la zone à fort cisaillement avant de retourner dans le bac d'amorce. Lorsque le rapport débit de recirculation / débit d'alimentation dépasse 5, on constate que la génération de fines est suffisante pour commencer à avoir une influence sur la taille des particules de la suspension.

### Essais avec un broyeur vibrant

Nous avons utilisé un broyeur vibrant PALLA (marque déposée) avec ses deux cylindres remplis à 65% de cylpeps en acier. Le niveau de surverse du cylindre supérieur a été réglé au maximun de façon à ce que le broyeur fonctionne quasiment plein (temps de séjour maximum pour un débit donné). La charge broyante utilisée est la suivante:

- cylindre supérieur 120 kg de cylpeps en acier de 16 mm
- cylindre inférieur 120 kg de cylpeps en acier de 12 mm

L'ensemble des essais a été effectué avec les paramètres de marche suivants:

| Débit (l/h) | 300 | 100 | 300 |
|---|---|---|---|
| Amplitude de vibration (mm) | 8 | 8 | 12 |
| Temps de séjour dans le broyeur (mn) | 8 | 24 | 8 |

L'amplitude de vibration, sur un échelle de 6 à 12 mm, correspond au diamètre de l'enveloppe circulaire de la trajectoire d'un point de la paroi vibrante.

Quelle que soit l'amplitude de vibration testée, le broyeur vibrant a créé beaucoup de fines et une cassure importante des grains d'hydrate. Le flux horaire de fines générées par ce broyage est à peu près constant. En l'occurrence, il a été mesuré entre 5,6 et 21,5 $10^{14}$ particules par heure, suivant les paramètres de marche du broyeur, le maximum étant obtenu avec 300 l/h et une amplitude de 12 mm.

### Essais avec ultra-sons

Des comptages de particules ainsi qu'une analyse granulométrique ont été effectués sur une suspension de référence et sur la même suspension ayant subi pendant 30 minutes un traitement ultrasonore à 100 W/cm2, sous une fréquence de 20 kHz.

On a vu apparaître après passage des ultra-sons une très importante quantité de fines particules de diamètre moyen D50 inférieur à 15 μm. Le rapport du nombre de particules entre la suspension traitée et la suspension de référence se situe entre 40 et 60 pour les particules de diamètre inférieur à 6 μm.

## MISE EN OEUVRE INDUSTRIELLE

### Turbine cisaillante

La figure 2 représente un circuit **Q** en dérivation sur le bac d'amorce **A,** dans lequel circule une aliquote **11** de la suspension d'aluminate sursaturée **3** grâce à une turbine cisaillante **T** qui joue le rôle de pompe à recirculation.

Cette turbine génère selon l'invention un cisaillement important dans l'aliquote **11** de la suspension d'aluminate sursaturée **3.** Comme la génération des amorces est assez faible, on réalise plusieurs circuits de ce type en recirculation sur le bac d'amorce, le flux total recirculant dans ces circuits devant être comparable au flux de la suspension traversant le bac d'amorce et se dirigeant vers les décomposeurs.

### Pompe centrifuge

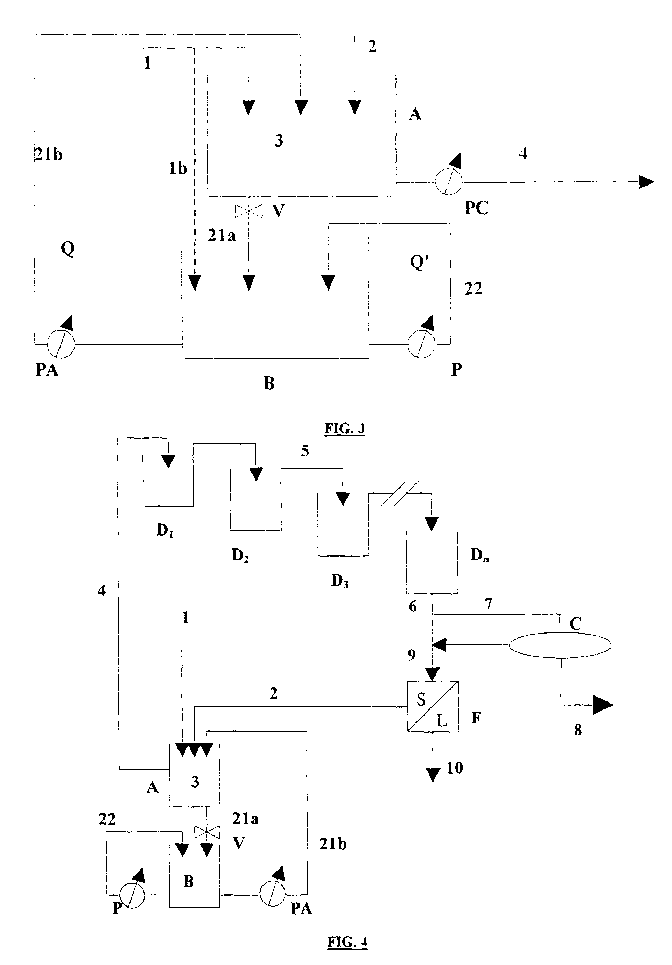

La figure 3 représente un bac auxiliaire **B** alimenté par un circuit **Q** en recirculation partant et aboutissant au bac d'amorce **A.** En ouvrant la vanne **V,** l'aliquote **21** de la suspension d'aluminate sursaturée **3** est extraite (**21a**) du bac d'amorce **A** et alimente un bac auxiliaire **B.** Une partie de cette aliquote **21** est elle-même extraite et recyclée **(22)** dans un circuit **Q'** en recirculation sur le bac auxiliaire **B** à l'aide d'une pompe centrifuge **P.** L'aliquote **21b** est prélevée du bac auxiliaire B et reconduite dans le bac d'amorce A à l'aide de la pompe centrifuge **PA**. Le débit de l'aliquote extraite **21a** et reversée 21b dans le bac d'amorce **A** représente le dixième du flux de la suspension d'aluminate de la chaîne. La pompe centrifuge **P** permet de faire circuler une partie **22** de cette aliquote **21** dans le circuit dérivé avec un débit plus de cinq fois supérieur.

Une modalité avantageuse de l'invention consiste à alimenter également le bac auxiliaire **B** avec une aliquote **1b** de la liqueur d'aluminate sursaturée **1.** Le mélange ainsi formé au niveau du bac auxiliaire **B** se trouve dans un état de sursaturation plus important. Un tel ajout, en augmentant la valeur du Rp de la suspension **22** dont une partie est soumise à recirculation à fort débit, favorise la précipitation et renforce la génération des nucleï.

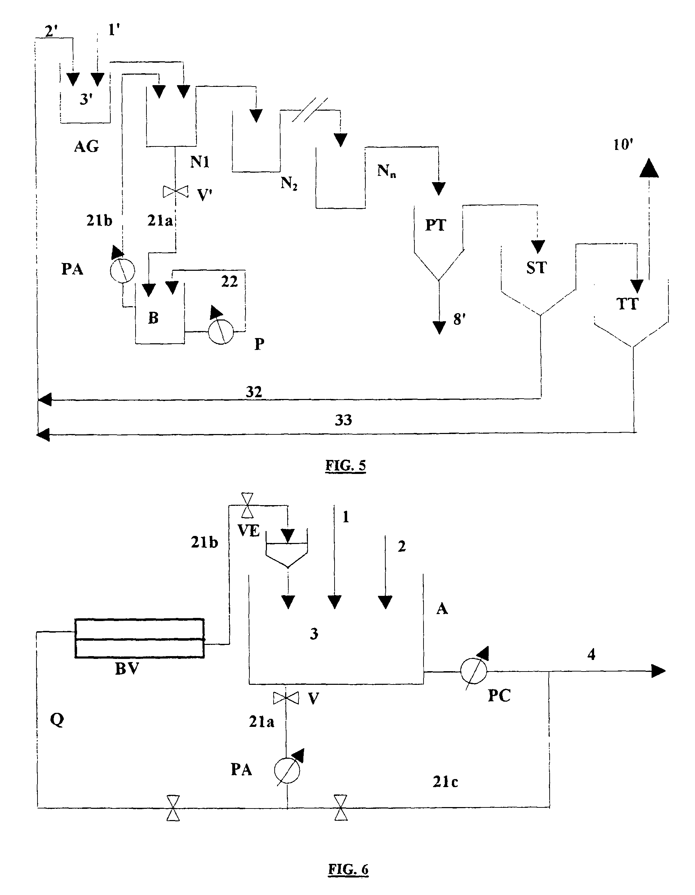

La figure 4 situe le dispositif de la figure 3 adapté au circuit de la chaîne BAYER de type européen de la Figure 1. La liqueur d'aluminate sursaturé **1**, de Rp ≈1.2 et de concentration en soude caustique de 140 g Na2O/l est mélangée au trihydrate recyclé **2** imprégné de liqueur décomposée. La suspension **3** résultant de ce mélange entre dans le bac d'amorce **A** avec un Rp voisin de 0,95. Une partie **21** de la suspension **3** passe par un bac auxiliaire **B,** pour être recyclée (**21b**) sur le bac d'amorce **A.** Une aliquote de la liqueur d'aluminate **1** - ne figurant sur la figure 4, pour faciliter la lisibilité du dessin - vient optionnellement alimenter le bac auxiliaire **B,** sans passer par le bac d'amorce. Sur le bac auxiliaire **B** est branché un circuit en boucle où l'on fait circuler une partie **22** de la suspension avec un débit imposé plus important que le débit d'alimentation du bac auxiliaire. Le débit de recirculation est imposé par une pompe centrifuge **P** qui fonctionne continuellement de telle sorte que le rapport des débits recirculation/alimentation soit maintenu à une valeur comprise entre 5 et 15.

La température est maintenue à 60°C dans le bac d'amorce et dans le bac auxiliaire, puis décroît dans les bacs suivants. Au bout de trois semaines, on constate que la taille des grains D50 se stabilise à une valeur comprise entre 60 et 90 μ suivant le rapport des débits recirculation/alimentation choisi.

La figure 5 montre l'adaptation envisagée pour un circuit Bayer de type américain où le dispositif de la figure 3 est monté en dérivation sur le premier bac nourrisseur **N1**, alimenté en suspension provenant du bac d'agglomération **AG** et mélangée à l'amorce secondaire **32** recyclée à partir du "secondary thickener" **ST**. L'hydrate produit **8'** sort en sous-verse du "primary thickener" **PT.** La liqueur décomposée **10'** sort en surverse du "tertiary thickener" **TT,** alors que l'amorce tertiaire **33** sort en sous-verse du tertiary thickener pour être mélangée à l'amorce secondaire **32** puis à la liqueur sursaturée **1'**, la suspension **3'** obtenue étant ensuite versée dans le bac d'agglomération **AG.** Comme indiqué sur la figure 3, il est avantageux, notamment dans le cas où l'on réalise un circuit en dérivation sur le premier bac nourrisseur **N1**, d'alimenter également le bac auxiliaire **B** avec une aliquote de la liqueur d'aluminate sursaturée **1'**. Ceci permet d'augmenter notablement le Rp de la suspension d'aluminate qui à ce stade est déjà moins en sursaturation.

**Broyeur vibrant**

La figure 6 représente un circuit **Q** en dérivation sur le bac d'amorce **A.** Une aliquote **21a** de la suspension d'aluminate sursaturée **3** est prélevée à l'aide d'une pompe **PA** et d'une vanne **V.** La suspension est dirigée vers un broyeur vibrant **BV** travaillant sous pression. La suspension **21b** en sortie du broyeur envoyée dans le bac d'amorce. La mesure du débit (de l'ordre de 2 m$^3$/h) est faite par un débitmètre ou un pot jaugé placé en sortie du broyeur. Le débit est régulé par le moyen d'une vanne d'étranglement. L'excès **21c** de la suspension prélevée est réintroduit directement dans la suspension **4** qui alimente le premier bac décomposeur.

**AVANTAGES DU PROCEDE SELON L'INVENTION**

Le procédé selon l'invention permet de générer des amorces au sein même de la suspension en quantité contrôlée et sans faire appel à des paramètres de fonctionnement de la chaîne BAYER qui ont une influence sur la qualité finale du produit, la teneur en soude résiduelle par exemple.

Ce procédé intéresse tous les procédés visant une haute productivité de la liqueur d'aluminate et faisant intervenir une teneur en soude caustique élevée (supérieure à $\approx$140 g Na2O/l)

**Revendications**

1. Procédé BAYER de fabrication de trihydrate d'alumine (8; 8') par précipitation en présence d'amorces recyclées en début de décomposition d'une liqueur sursaturée (1; 1') d'aluminate de sodium **caractérisé en ce qu'**on prélève en début de décomposition une aliquote (11, 21) de la suspension d'aluminate, en ce qu'on impose à ladite aliquote une action mécanique intense et en ce qu'on réintroduit ladite aliquote en début de décomposition.

2. Procédé selon la revendication 1 **caractérisé en ce que** l'on prélève puis réintroduit l'aliquote de suspension d'aluminate (3) dans le bac d'amorce (A) en tête de décomposition d'une chaîne BAYER de type européen.

3. Procédé selon la revendication 1 **caractérisé en ce que** l'on prélève puis réintroduit l'aliquote de suspension d'aluminate (3') dans le bac d'agglomération (AG) en tête de décomposition d'une chaîne BAYER de type américain.

4. Procédé selon la revendication 1 **caractérisé en ce que** l'on prélève puis réintroduit l'aliquote de suspension d'aluminate (3') dans le premier bac nourrisseur (N1) d'une chaîne BAYER de type américain.

5. Procédé selon la revendication 1 **caractérisé en ce que** ladite action mécanique intense génère un cisaillement dans la suspension où les vitesses de déformation maximales dépassent 10$^3$ s$^{-1}$.

6. Procédé selon la revendication 5, **caractérisé en ce que** le cisaillement intense est généré dans ladite aliquote (11) de suspension d'aluminate sursaturée (3) par une turbine cisaillante (T).

7. Procédé selon l'une quelconque des revendications 1 à 6 **caractérisé en ce que** ladite action mécanique intense génère un cisaillement dans la suspension où les vitesses de déformation maximales dépassent 10$^3$ s$^{-1}$.

8. Procédé selon la revendication 7, **caractérisé en ce que** le cisaillement intense est généré dans ladite aliquote (11) de suspension d'aluminate sursaturée (3) par une turbine cisaillante (T).

9. Procédé selon la revendication 7 **caractérisé en ce que** ladite turbine cisaillante (T) agit comme une pompe assurant la recirculation de la suspension (11) d'aluminate sursaturée (3) en tête de décomposition.

10. Procédé selon la revendication 5 ou 6, **caractérisé en ce qu'**on branche un circuit en boucle sur ledit bac auxiliaire (B), où la suspension prélevée (22) recircule à l'aide de ladite pompe centrifuge supplémentaire (P) avec un débit supérieur à 5 fois le débit d'alimentation du bac auxiliaire (B).

**11.** Procédé selon la revendication 10 **caractérisé en ce que** l'aliquote (21) de la suspension d'aluminate (3') représente 5 à 40% de la suspension circulant dans la chaîne de décomposition du circuit BAYER.

**12.** Procédé selon l'une quelconque des revendications 1 à 6, **caractérisé en ce qu'**une aliquote de la suspension d'aluminate sursaturée (3) est prélevée (21a) puis réintroduite (21b) en début de décomposition après avoir traversé un broyeur vibrant (BV).

**13.** Procédé selon la revendication 12 **caractérisé en ce que** l'aliquote (21) de la suspension d'aluminate (3) représente moins de 1% de la suspension circulant dans la chaîne de décomposition du circuit BAYER.

**14.** Procédé selon l'une quelconque des revendications 1 à 6 **caractérisé en ce qu'**une aliquote de la suspension d'aluminate sursaturée (3) est prélevée (21a) puis réintroduite (21b) en début de décomposition après avoir traversé un bac auxiliaire dans lequel la suspension est soumise à des ultrasons de forte puissance.

**15.** Procédé selon la revendication 14 **caractérisé en ce que** l'aliquote (21) de la suspension d'aluminate (3) représente moins de 5% de la suspension circulant dans la chaîne de décomposition du circuit BAYER.

**Patentansprüche**

**1.** Bayer-Verfahren zur Herstellung von Aluminiumhydroxid (8; 8') durch Abscheidung einer übersättigten Natriumaluminatlauge (1; 1') in Anwesenheit von Impfstoffen, welche an den Anfang des Zersetzungsprozesses zurückgeführt werden, **dadurch gekennzeichnet**, dass ein aliquoter Teil (11, 21) der Aluminatsuspension am Anfang des Zersetzungsprozesses entnommen wird, dass der aliquote Teil einer intensiven mechanischen Behandlung unterworfen wird und dass der aliquote Teil am Anfang des Zersetzungsprozesses wieder eingeleitet wird.

**2.** Verfähren nach Anspruch 1, **dadurch gekennzeichnet**, dass der aliquote Teil der Aluminatsuspension (3) aus dem Impfbehälter (A) einer Bayer-Kette europäischen Typs am Anfang des Zersetzungsprozesses entnommen und dann wieder dort eingeleitet wird.

**3.** Verfahren nach Anspruch 1, **dadurch gekennzeichnet**, dass der aliquote Teil der Aluminatsuspension (3') aus dem Agglomerationsbehälter (AG) einer Bayer-Kette amerikanischen Typs am Anfang des Zersetzungsprozesses entnommen und dann wieder dort eingeleitet wird.

**4.** Verfahren nach Anspruch 1, **dadurch gekennzeichnet**, dass der aliquote Teil der Aluminatsuspension (3') aus dem ersten Nährbehälter (N1) einer Bayer-Kette amerikanischen Typs entnommen und dann wieder dort eingeleitet wird.

**5.** Verfahren nach Anspruch 1, **dadurch gekennzeichnet**, dass die intensive mechanische Behandlung eine Scherung in der Suspension erzeugt, bei der die maximalen Verformungsgeschwindigkeiten $10^3$ $s^{-1}$ überschreiten.

**6.** Verfahren nach Anspruch 5, **dadurch gekennzeichnet**, dass die intensive Scherung in dem aliquoten Teil (11) der übersättigten Aluminatsuspension (3) durch eine Scherturbine (T) erzeugt wird.

**7.** Verfahren nach einem der Ansprüche 1 bis 6, **dadurch gekennzeichnet**, dass die intensive mechanische Behandlung eine Scherung in der Suspension erzeugt, bei der die maximalen Verformungsgeschwindigkeiten $10^3$ $s^{-1}$ überschreiten.

**8.** Verfahren nach Anspruch 7, **dadurch gekennzeichnet**, dass die intensive Scherung in dem aliquoten Teil (11) der übersättigten Aluminatsuspension (3) durch eine Scherturbine (T) erzeugt wird.

**9.** Verfahren nach Anspruch 7, **dadurch gekennzeichnet**, dass die Scherturbine (T) wie eine Pumpe wirkt, die den Rücklauf der Suspension (11) aus übersättigter Aluminatlösung (3) zum Anfang des Zersetzungsprozesses gewährleistet.

**10.** Verfahren nach Anspruch 5 oder 6, **dadurch gekennzeichnet**, dass ein Ringkreis an den Hilfsbehälter (B) angeschlossen wird, wo die entnommene Suspension (22) mit Hilfe der zusätzlichen Zentrifugalpumpe (P) mit einer Geschwindigkeit zurückläuft, die mehr als 5 mal höher ist als die Versorgungsgeschwindigkeit des Hilfsbehälters (B).

**11.** Verfahren nach Anspruch 10, **dadurch gekennzeichnet**, dass der aliquote Teil (21) der Aluminatsuspension (3') 5 bis 40 % der Suspension ausmacht, die in der Zersetzungskette des Bayer-Kreislaufs umläuft.

**12.** Verfahren nach einem der Ansprüche 1 bis 6, **dadurch gekennzeichnet**, dass ein aliquoter Teil der übersättigten Aluminatsuspension (3) am Anfang des Zersetzungsprozesses entnommen (21 a) und dann dort wieder eingeleitet wird (21 b), nachdem er durch eine Schwingmühle (BV) gelaufen ist.

**13.** Veflahren nach Anspruch 12, **dadurch gekennzeichnet**, dass der aliquote Teil (21) der Aluminatsuspension (3) mindestens 1 % der Suspension ausmacht, die in der Zersetzungskette des Bayer-Kreislaufs umläuft.

**14.** Verfahren nach einem der Ansprüche 1 bis 6, **dadurch gekennzeichnet**, dass ein aliquoter Teil der übersättigten Aluminatsuspension (3) am Anfang des Zersetzungsprozesses entnommen (21 a) und dann dort wieder eingeleitet wird (21 b), nachdem er durch einen Hilfsbehälter gelaufen ist, in dem die Suspension starkem Ultraschall ausgesetzt wird.

**15.** Verfahren nach Anspruch 14, **dadurch gekennzeichnet**, dass der aliquote Teil (21) der Aluminatsuspension (3) weniger als 5 % der Suspension ausmacht, die in der Zersetzungskette des Bayer-Kreislaufs umläuft.

**Claims**

**1.** BAYER process for manufacturing alumina trihydrate (8, 8') by precipitation of a pregnant sodium aluminate liquor (1,1')in the presence of seed which is recycled to the top of decomposition line, **characterized in that** at the beginning of precipitation, an aliquot (11, 21) is drawn off from the aluminate slurry, intense mechanical action is applied to this aliquot, and the said aliquot is returned to the beginning of precipitation.

**2.** Process according to claim 1, **characterized in that** the aluminate slurry aliquot (3) is drawn off and then returned into the seed tank (A) at the beginning of precipitation in a European type BAYER line.

**3.** Process according to claim 1, **characterized in that** the aluminate slurry aliquot (3') is drawn off and then returned into the agglomeration tank (AG) at the beginning of precipitation in an American type BAYER line.

**4.** Process according to claim 1, **characterized in that** the aluminate slurry aliquot (3') is drawn off and then returned into the first feed tank (N1) in an American type BAYER line.

**5.** Process according to any one of claims 1 to 4, **characterized in that** the said aliquot (21) of the pregnant aluminate slurry (3) drawn off and then returned at the beginning of precipitation, passes through an auxiliary tank (B), in which the said intense mechanical action is applied to the slurry.

**6.** Process according to claim 5, **characterized in that** an aluminate liquor pregnant in alumina (1b) is mixed with the said aliquot (21) of the pregnant aluminate slurry (3), in the said auxiliary tank (B).

**7.** Process according to any one of claims 1 to 6, **characterized in that** the said intense mechanical action generates a shear in the slurry in which the maximum deformation speeds exceed $10^3 s^{-1}$.

**8.** Process according to claim 7, **characterized in that** the intense shear is generated in the said aliquot (11) of the pregnant aluminate slurry (3) by a shear turbine (T).

**9.** Process according to claim 7, **characterized in that** the said shear turbine (T) acts like a pump recirculating the slurry (11) of pregnant aluminate (3) at the beginning of precipitation.

**10.** Process according to claim 5 or 6, **characterized in that** a circuit is connected as a loop on the said auxiliary tank (B), through which the drawn off slurry (22) is recirculated by means of the said additional centrifugal pump (P) with a flow 5 times greater than the feed flow to the auxiliary tank (B).

**11.** Process according to claim 10, **characterized in that** the aliquot (21) of the aluminate slurry (3') represents 5 to 40% of the slurry circulating in the BAYER circuit precipitation line.

12. Process according to any one of claims 1 to 6, **characterized in that** an aliquot of the pregnant aluminate slurry (3) is drawn off (21a) and then returned (21b) at the beginning of precipitation after passing through a vibrating grinder (BV).

13. Process according to claim 12, **characterized in that** the aliquot (21) of the aluminate slurry (3) is less than 1% of the slurry circulating in the BAYER circuit precipitation line.

14. Process according to any one of claims 1 to 6, **characterized in that** an aliquot of the pregnant aluminate slurry (3) is drawn off (21a) and then returned (21b) at the beginning of precipitation after passing through an auxiliary tank in which the slurry is subjected to high power ultrasounds.

15. Process according to claim 14, **characterized in that** the aliquot (21) of the aluminate slurry (3) is less than 5% of the slurry circulating in the BAYER circuit precipitation line.

**FIG. 1**

**FIG. 2**

FIG. 3

FIG. 4

FIG. 5

FIG. 6